Europäisches Patentamt

European Patent Office

Office européen des brevets

(19)

(11) Publication number: **0 016 880**
**B1**

(12) **EUROPEAN PATENT SPECIFICATION**

(45) Date of publication of patent specification: **26.05.82**

(51) Int. Cl.³: **F 16 C 33/50**

(21) Application number: **79300496.1**

(22) Date of filing: **28.03.79**

(54) Improvements in or relating to rolling bearings.

(43) Date of publication of application:
**15.10.80 Bulletin 80/21**

(45) Publication of the grant of the patent:
**26.05.82 Bulletin 82/21**

(84) Designated Contracting States:
**DE FR GB IT**

(56) References cited:
BE - A - 516 304
BE - A - 691 420
DE - A - 1 815 990
DE - B - 1 169 213
DE - B - 1 228 110
FR - A - 2 104 265
GB - A - 799 126
GB - A - 970 061
GB - A - 1 026 080
GB - A - 1 296 976
US - A - 3 194 612
US - A - 3 219 398
US - A - 3 399 008
US - A - 4 054 192

(73) Proprietor: **THE TORRINGTON COMPANY**
**59 Field Street**
**Torrington Connecticut 06790 (US)**

(72) Inventor: **Wakunami, Teruaki**
**15-1-309, Higashi Rinkan 1-Chome**
**Sagami-Shi Kanagawa-Ken (JP)**

(74) Representative: **Couch, Bernard Charles et al,**
**W.P. THOMPSON & CO. Coopers Building, Church**
**Street**
**Liverpool L1 3AB (GB)**

Courier Press, Leamington Spa, England.

Improvements in or relating to rolling bearings

This invention relates to rolling bearings and is concerned especially with an annular rolling bearing cage having a circumferentially discontinuous construction.

Circumferentially discontinuous cages are known.

In a bearing cage having only a single circumferential discontinuity, it is not possible to reduce the cage diameter, should circumstances so require and where the diameter of the cage is required to be enlarged, particularly where the bearing is to be assembled to a shaft, the discontinuous portion must often be opened to such an extent that it experiences excessive stress both at the discontinuous portion and at the diametrically opposed portions of the cage, leading to damage to the cage unless the portions concerned are given special configurations enabling them to be readily opened.

In order to connect together adjoining segments of a circumferentially discontinuous cage of the type described above, connector means are provided at the ends of the adjoining cage segments but almost invariably those segments have been connected without circumferential clearance so that the diameter of the cage could not be enlarged nor reduced. This has led to inconvenience in that each such cage has had to be newly designed and manufactured for bearings having different roller pitch diameters, even where the rollers were equal in diameter and number.

British Patent No. 1,296,976 describes a roller cage effectively made up of separate links so that the same size of link can be used for a range of roller pitch diameters, the number of links to make up the cage having them accordingly. However, there is no circumferential clearance at the joints so that it is still not possible to temporarily enlarge or reduce the diameter for the purposes mentioned above.

Depending on the condition of use of the bearing and for example, when inner and outer races (or track members corresponding to the inner and outer races) are rotated in the same direction at equal speeds, the rollers positioned between the inner and outer races stop their rotation and the assembly comprising the cage together with the rollers revolves in the same direction and at the same velocity as the inner and outer races. If a load is imparted to the bearing in this state, there has been a disadvantage that impressions are created in the race surface of the inner and outer races because the rollers are stopped between the inner and outer races.

The invention seeks to overcome the disadvantages of the prior art cages and to provide a roller bearing cage which can be commonly used within a specific range even for bearings having different pitch diameters of rollers and which prevents the creation of impressions in the race surfaces.

The present invention resides in an annular rolling bearing cage having a plurality of circumferential discontinuities defining a plurality of arcuate cage segments each provided at its ends with connector means for connecting it to an adjacent segment, each connector means being constructed so as to render a joined pair of segment inseparable in at least the circumferential direction, characterized in that each said connector means embodies a circumferential clearance which permits enlargement and reduction of the diameter of the cage.

The invention will be described further by way of example, with reference to the accompanying drawings, in which:—

Figures 1 and 2 are respectively a side view and a front view, both partly in section, of essential portions of one cage embodying the invention,

Figures 3 to 5 are fragmentary details, to an enlarged scale, of a roller cage connector means, Figure 3 being a perspective view, Figure 4 being a front view and Figure 5 being a side view,

Figure 6 is a view corresponding to Figure 3 but showing a second embodiment,

Figure 7 is a front view of a roller cage provided with a connector means of a second embodiment,

Figures 8 to 10 inclusive are views similar to that of Figure 3 of further embodiments of connector means,

Figure 11 is a side view of the embodiment shown in Figure 10,

Figures 12 and 13 are views corresponding to Figures 10 and 11, respectively, but showing a still further embodiment,

Figure 14 is a fragmentary perspective view of a cage having the connector means of Figures 12 and 13,

Figure 15 is a view similar to that of Figure 3 of a still further connector means, and

Figure 16 is a cross-sectional view taken along the line A—A of Figure 15.

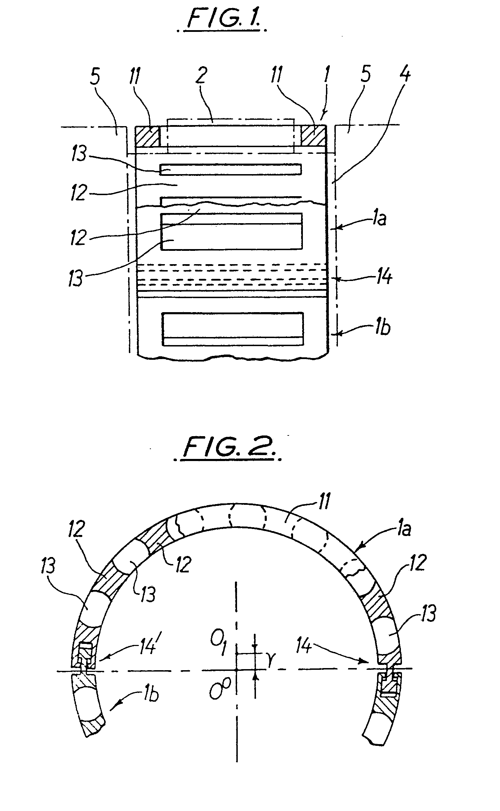

Referring firstly to Figures 1 and 2, a roller bearing cage is shown having axial end rims 11 connected by cross-bars 12 between which are defined pockets 13 each serving to receive a roller 2. The cage is shown as being circumferentially discontinuous at diametrically opposed regions 14 and 14' and thus comprises two segments 1a and 1b. By way of example, the cage is shown mounted on a shaft 4 between axially spaced shoulders 5 of the shaft.

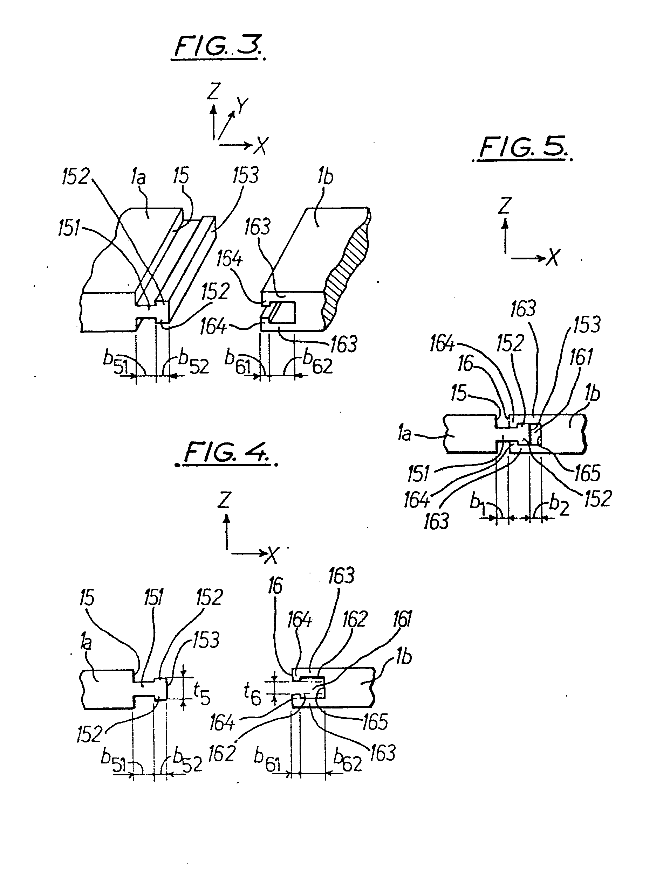

In the connector means shown in Figures 3 to 5, one of the opposed ends 15 and 16 of the cage segments 1a and 1b of the discontinuity 14, for example, the end 15, has a circumferentially directed tongue 151 terminating in a bead or head of radially greater dimension than the tongue 151 and defined by radially directed end portions 152, 152. The other end 16 has a socket 161 engageable with the tongue 151 and having recessed regions 162, 162 engageable with the convex head portions 152, 152 of the tongue. The socket 161 is defined between circumferentially directed and radially spaced arms 163 and has a reduced entrance bounded by opposed radially thickened ends 164 of those arms.

If the radial dimension of the terminating head of the tongue 151 is $t_5$ and the radial dimension of the entrance to the socket 161 is $t_6$, then the relation between the two is $t_5 > t_6$. Also, if the length of the tongue 151 is $b_{51}$, the length of the head 152, 152 is $b_{52}$, the internal length of the socket 161 is $b_{62}$ and the length of the arms 164 is $b_{61}$, then these are in the following relations,

$$b_{51} > b_{61}, \quad b_{52} > b_{62}$$

Therefore, by bringing the tongue 151 and the socket 161 into engagement with each other so that the head portions 152, 152 engage the concave portions 162, 162, as shown in Figure 5, the cage segment 1a and the cage segment 1b may be connected together to thereby prevent circumferential and radial separation therebetween. Clearances $b_1$ and $b_2$ necessary for the enlargement and reduction of the diameter of the cage are respectively left between the ends 15 and 16 and between the free end 153 of the tongue 151 and the base surface 165 of the socket 161.

Figures 6 and 7 show a second embodiment of bearing cage connector means, in which the engaging portions of the cage segments are formed into substantially L-shaped cross-sections having convex portions 152 and 164 projected in opposite directions so as to prevent the cage segments 1a and 1b from being separated in the circumferential direction (the X direction) as viewed in the drawings. Moreover, if the diametrically opposed, circumferential discontinuities are made symmetrical in shape as shown in Figure 7, it is also possible to prevent the cage segments 1a and 1b from being separated in the radial direction (the Z direction). The references $b_1$ and $b_2$ in Figure 7 are circumferential clearances for enabling the diameter of the cage to be enlarged or reduced, as circumstances may require.

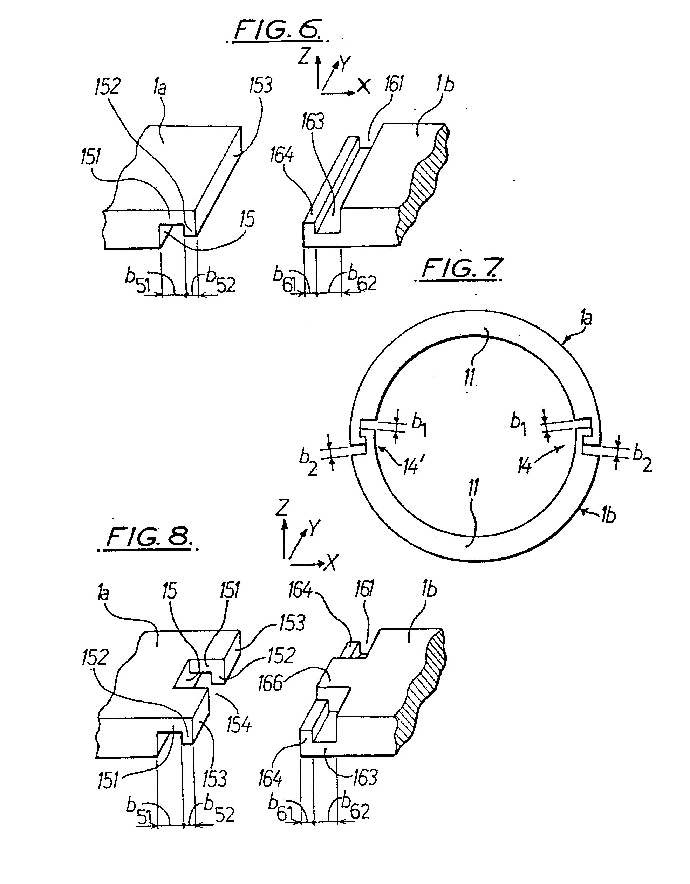

In the connector means shown in Figure 8, the mutually engaging portions are opposed in the axial direction (the Y direction) and there are formed a mutually engageable recess 154 in the tongue 151 and a complementary convex portion 166 in the socket 161. When the cage segments 1a and 1b are connected together, they are thus prevented from axial separation.

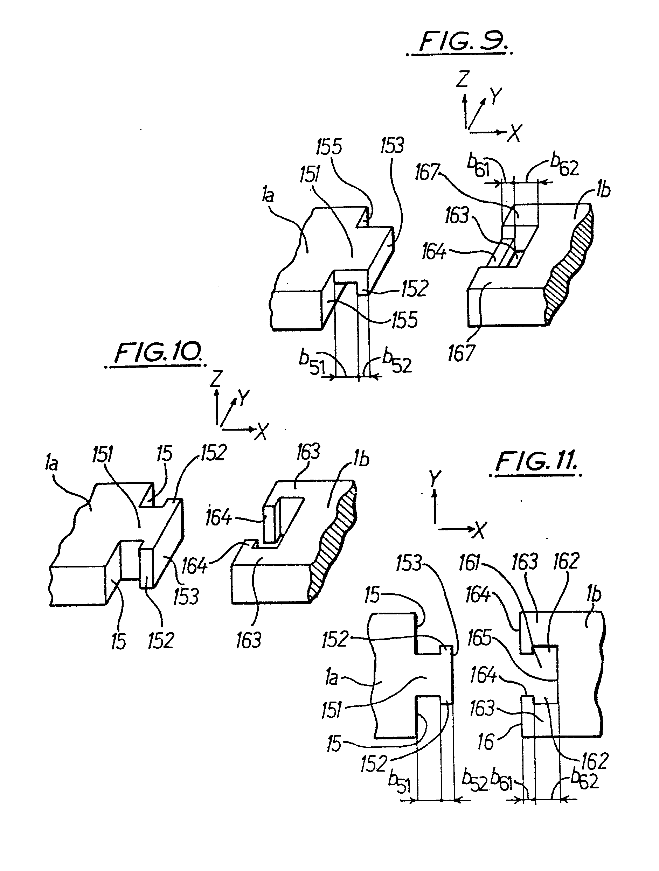

Figure 9 shows a modification of the connector means illustrated in Figures 6 and 7. In Figure 9, the mutually engaging portions of the cage segments 1a and 1b are formed only in the axially central region of the cage, the remainder of the end surfaces being formed as flat surfaces 155 and 167, so that the cage segments 1a and 1b may be prevented from axial separation (i.e. in the Y direction).

It will, of course, be appreciated that even in the embodiments of Figures 8 and 9, if the circumferentially discontinuous portions lying at diametrically opposed positions are made symmetrical in shape, it is possible to prevent the cage segments 1a and 1b from being separated also in the radial direction.

Figures 10 and 11 show an embodiment of the connector means in which a tongue 151 having axially directed terminal head portions 152, 152 is provided at the axially central region of one end 15, and a complementary socket 161 having axially directed recessed regions 162, 162 is formed on the other end 16 for engagement with the tongue and its head. In this embodiment, the cage segments may be prevented from being separated both in the circumferential direction (the X direction) and the axial direction.

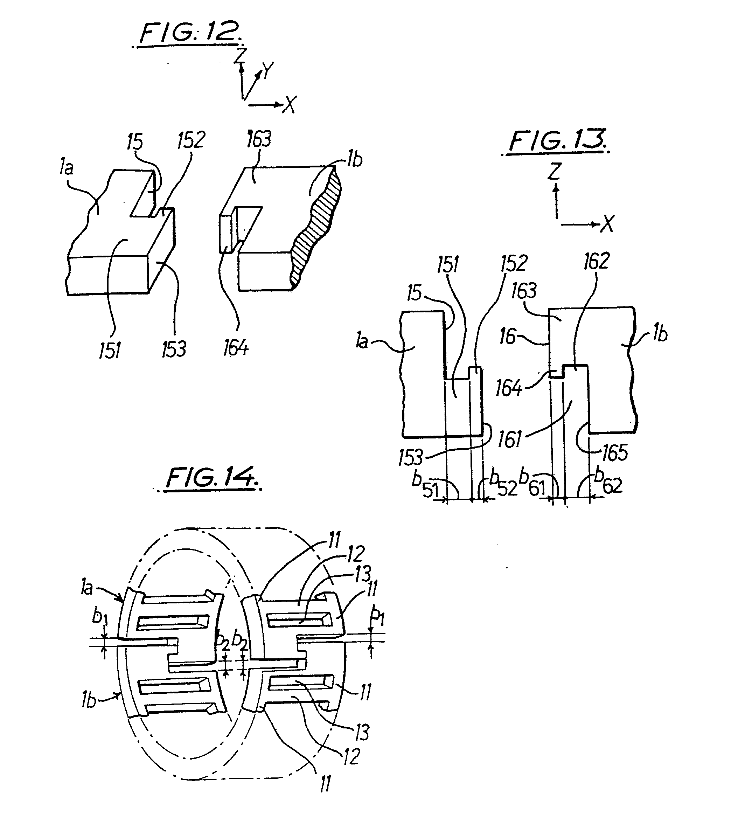

A modification of the previous embodiment is shown in Figures 12 to 14, in which it will be seen that the tongue 151 is provided at one axial end of the cage segment end 15 and its head 152 faces the other axial end. The complementary socket 161 is formed, so to speak, in a converse manner at the end 16 of the cage segment 1b. Thus, when compared with the previously described embodiment, the recessed portion 162 and the arm 163 bounding it are provided at one axial side only of the end 16 of cage segment 1b. Particularly, in this embodiment, if the diametrically opposed discontinuites in the cage are made asymmetrical as shown in Figure 14, then the cage segments 1a and 1b are prevented from being separated in the axial direction.

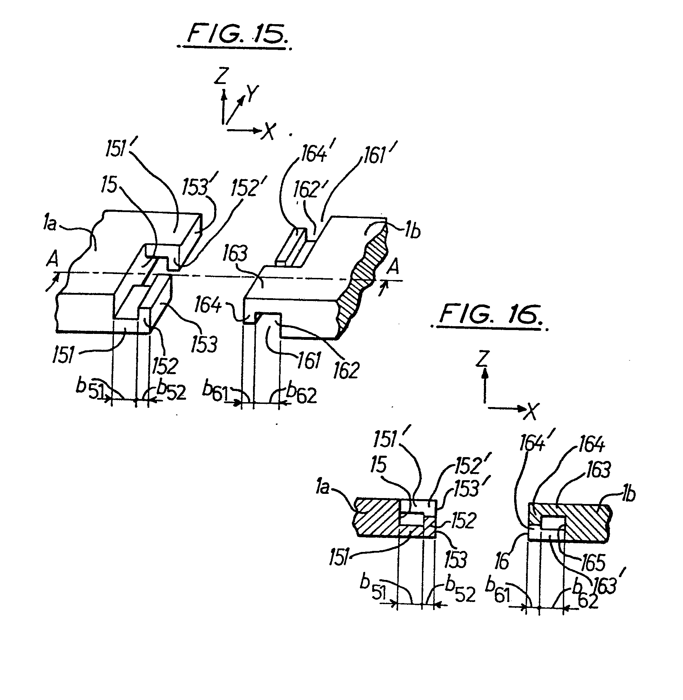

Figures 15 and 16 show a further embodiment of the connector means, in which one end 15 has tongues 151, 151' at the point-symmetrical positions with respect to the centre thereof, the tongues 151 and 151' having at their free ends, radially opposed beads or heads 152 and 152' and the other end 16 has socket portions 161 and 161' at positions corresponding to the tongues 151 and 151', the socket 161 and 161' having recesses 162 and 162' engageable with the beads or heads 152 and 152'.

When the one end 15 and the other end 16 of cage segments constructed as described above are connected together so that the tongues 151 and 151' engage the sockets 161 and 161', respectively, the tongues 151 and 151' engage the arms 163' and 163, respectively, in the axial direction (the Y direction) to prevent axial separation; while the tongue 151 and its head 152, together with the tongue 151' and its head 152' respectively engage the thickened end 164 and the arm 163 on the one hand and the thickened end 164' and the arm 163' on the other hand to prevent separation in a radial direction (the Z direction).

Also in the various embodiments of Figures 8 to 16, the clearances necessary to enlarge or reduce the diameter of the cage are provided in the connecting means similarly to the manner as described with respect to Figures 3 to 7.

In the roller bearing cage provided by the present invention, as described above, adjacent cage segments are formed with connector means which are not separable in at least one of the directions comprising the circumferential direction, the axial direction and the radial direction, whereby the cage segments serving to make up one cage may be handled integrally to facilitate the handling of the cage itself or the handling of the cage fitted with rollers or the assembly of the cage in a position of use. By enabling the diameter of the cage to be enlarged or reduced, the cage may be used in any one of a specific range of bearings differing in pitch diameter. The adjustable diameter also leads to an extended life of the cage.

The assembly of the above-described cage and rollers is such that the centre of gravity $O_1$ (Figure 2) of the cage segment 1a is eccentric by a distance $p$ in the radial direction with respect to the geometrical centre O of the bearing. Thus, the centre of gravity $O_1$ revolves around the geometrical centre O of the bearing so that the moment due to gravity is applied to each cage segment about the geometrical centre. Since the connector means between the cage segments have clearances in a circumferential direction, however, then when at least one segment of the cage assembly is in a non-loaded condition, its position is movable relative to the inner and outer races under the action of the movement applied to it due to gravity. Therefore, even under a condition of use wherein the inner and outer races are rotating and equal speeds, the cage segments are constantly repetitively moved relative to the inner and outer races, thus tending to prevent impressions from being formed on the race surfaces when the bearing is loaded and preventing any such impressions from being enlarged.

Further, when the inner and outer races are integrally rotated in the same direction but with a variation induced in the rotational speed thereof, each of the cage segments experience same angular acceleration whilst that segment is under load with the result that the angular inertia of the segment not under load, which inertia is due to the center of gravity $O_1$ being eccentric by $p$ with respect to the center O of the bearing, enables the inner and outer races to move relatively to the unloaded segment. This results in the prevention of impressions from being formed on the surfaces of the races due to the load on the bearing or preventing such impressions from being enlarged.

As the circumferential clearance in the present invention become larger, the range of common use is widened, but it is desirable to select the dimension of such clearances to three times the diameter of the rollers used or less because of the relation thereof with the load capacity. The formation of the connecting portions is particularly facilitated when the cage is formed of a plastics material.

**Claims**

1. An annular rolling bearing cage having a plurality of circumferential discontinuities defining a plurality of arcuate cage segments (1a, 1b) each provided at its ends with connector means (151, 161) for connecting it to an adjacent segment, each connector means (151, 161) being constructed so as to render a joined pair of segments (1a, 1b) inseparable in at least the circumferential direction, characterised in that each said connector means (151, 161) embodies a circumferential clearance ($b_1$, $b_2$) which permits enlargement and reduction of the diameter of the cage.

2. A bearing cage according to claim 1, wherein each of said adjacent segments has connector means constructed so as to be inseparable also in the radial direction.

3. A bearing cage according to claim 1 or 2, wherein each of said adjacent segments has connector means constructed so as to be inseparable also in the axial direction.

4. A bearing cage according to any of claims 1 to 3, in which the connector means includes a tongue (151) at one end of the cage segment (1a) engageable in a socket (161) of the co-operating end of the adjoining cage segment (1b), the tongue and socket having complementary locking means for rendering said cage segments inseparable in the required direction or directions.

5. A bearing cage according to claim 4, in which the socket (161) is in part defined by one or more circumferentially directed arms (163) extending from the cage segment (1b) and by a thickened end (164) at the end of each arm, and in which the free end of the tongue (151) has one or more convex head portions (152) respectively complementary to and co-operating with the or each end (164) to constitute said locking means.

6. A bearing cage according to claim 5, in which the tongue (151) terminates at its free end in a pair of radially opposed convex head portions (152), and in which the socket (161) is defined between a pair of radially spaced arms (163), the ends (164) of the arms (163) serving to create a reduced entrance to said socket.

7. A bearing cage according to claim 5, in which the tongue (151) extends circumferentially from one radially peripheral region of the respective cage segment (1a) and has a single convex head portion (152) directed towards the opposite radial periphery of that segment (1a), whilst the adjoining cage segment (1b) has a single arm (163) extending circumferentially from its peripheral region corresponding to said opposite radial periphery and terminating in a thickened end (164) directed radially opposite to said convex head portion (152).

8. A bearing cage according to claim 7, in which the tongue (151) is formed intermediate its axial ends with a recess (154) and in which the socket (161) is provided with a corresponding enlargement (166) of the thickened end (164) for engaging and locking in said recess.

9. A bearing cage according to claim 7, in which the tongue (151) is of axially reduced width relative to the remainder of the respective cage segment (1a) and is positioned intermediate the axial ends of said segment, and in which a similarly situated recess is provided in the adjoining cage segment (1b) to receive and lock with said tongue.

10. A bearing cage according to claim 5, in which the tongue (151) terminates at its free end in a pair of axially opposed convex head portions (152), and in which the socket (161) is defined between a pair of axially spaced arms (163) having axially opposed thickened ends (164) between which is a reduced width entrance to said socket.

11. A bearing cage according to claim 5, in which the tongue (151) extends circumferentially from one axial end region of the respective cage segment (1a), and has a single, axially directed convex head portion (152) continuing from its axially inner end in circumferentially spaced relation to the end of the segment itself, and in which the adjoining cage segment (1b) has a single arm (163) extending circumferentially from an opposed axial end region and terminating in a thickened end (164) which is axially opposed to and capable of interlocking with said convex head portion (152).

12. A bearing cage as claimed in claim 5, in which one cage segment (1a) is provided with a pair of radially spaced, axially separated tongues (151, 151') of reduced axial width relative to the remainder of the cage segment, the tongues (151, 151') terminating in radially opposed convex head portions (152, 152') and in which the adjoining cage segment (1b) is provided with a pair of axially spaced sockets (161, 161') complementary to the tongues (151, 151') and defined at least in part by respective circumferentially directed arms (163, 163') terminating in thickened ends (164, 164') for co-operating and interlocking with the tongues (151, 151') and their head portions (152, 152').

**Patentansprüche**

1. Ringförmiger Wälzlagerkäfig mit einer Vielzahl von längs des Umfangs vorgesehenen Unterbrechungen, die eine Vielzahl von gekrümmten Käfigsegmenten (1a, 1b) begrenzen, deren jedes an seinen Enden mit Verbindungsmitteln (151, 161) für seine Verbindung mit einem benachbarten Segment versehen ist, wobei jedes Verbindungsmittel (151, 161) so konstruiert ist, daß es ein miteinander verbundenes Paar von Segmenten (1a, 1b) in wenigstens der Umfangsrichtung untrennbar macht, dadurch gekennzeichnet, daß jedes Verbindungsmittel (151, 161) in Umfangsrichtung ein Spiel ($b_1$, $b_2$) aufweist, das eine Vergrößerung und Verkleinerung des Durchmessers des Käfigs gestattet.

2. Lagerkäfig nach Anspruch 1, dadurch gekennzeichnet, daß jedes der benachbarten Segmente Verbindungsmittel aufweist, die so konstruiert sind, daß sie auch in der radialen Richtung untrennbar sind.

3. Lagerkäfig nach Anspruch 1 oder 2, dadurch gekennzeichnet, daß jedes der benachbarten Segmente Verbindungsmittel aufweist, die so konstruiert sind, daß sie auch in der axialen Richtung untrennbar sind.

4. Lagerkäfig nach einem der Ansprüche 1 bis 3, dadurch gekennzeichnet, daß das Verbindungsmittel an einem Ende des Käfigssegments (1a) eine Zunge (151) aufweist, die zum Eingriff in eine Aufnahme (151) des mit der Zunge zusammenwirkenden Endes des anschließenden Käfigelements (1b) ausgebildet ist, wobei die Zunge und die Aufnahme komplementäre Verriegelungsmittel haben, um die Käfigsegmente in der erforderlichen Richtung oder in den erforderlichen Richtungen untrennbar zu machen.

5. Lagerkäfig nach Anspruch 4, dadurch gekennzeichnet, daß die Aufnahme (161) zum Teil durch einen oder mehrere sich in Umfangsrichtung erstreckende Arme (163) gebildet ist, die sich von dem Käfigsegment (1b) erstrecken, sowie durch eine verdicktes Ende (164) an dem Ende jedes Armes, und daß das freie Ende der Zunge (151) eine oder mehrere konvexe Kopfteile (152) aufweist, die komplementär zu dem oder zu jedem Ende (164) und zum Zusammenwirken damit ausgebildet sind, um die Verriegelungsmittel zu bilden.

6. Lagerkäfig nach Anspruch 5, dadurch gekennzeichnet, daß die Zunge (151) an ihrem freien Ende in einem Paar von radial einander entgegengerichteten konvexen Kopfteilen (152) endet, wobei die Aufnahme (161) zwischen einem Paar von radial mit Abstand angeordneten Armen (163) gebildet ist, wobei die Enden (164) der Arme (163) dazu dienen, eine verengte Eingangsöffnung zu der Aufnahme zu schaffen.

7. Lagerkäfig nach Anspruch 5, dadurch gekennzeichnet, daß die Zunge (151) sich in Umfangsrichtung von einem radialen Umfangsbereich des jeweiligen Käfigsegments (1a) erstreckt und einen einzigen konvexen Kopfteil (152) hat, der gegen den radial gegenüberliegenden Umfang dieses Segments (1a) gerichtet ist, während das benachbarte Käfigsegment (1b) einen einzigen Arm (163) hat, der sich in Umfangsrichtung von dem Umfangsbereich her erstreckt, der dem genannten radial gegenüberliegenden Umfang entspricht, wobei der Arm in einem verdickten Ende (164) endet, das radial entgegengesetzt zu dem konvexen Kopfteil (152) gerichtet ist.

8. Lagerkäfig nach Anspruch 7, dadurch gekennzeichnet, daß die Zunge (151) zwischen ihren axialen Enden mit einer Ausnehmung (154) ausgebildet ist und daß die Aufnahme (161) mit einer entsprechenden Verbreiterung (166) des verdickten Endes (164) zum Eingriff und zum Verriegeln in der Ausnehmung versehen ist.

9. Lagerkäfig nach Anspruch 7, dadurch gekennzeichnet, daß die Zunge (151) eine in axialer Richtung verminderte Breite in Bezug auf das entsprechende Käfigsegment (1a) hat und zwischen den axialen Enden des Segments angeordnet ist und daß eine in ähnlicher Weise angeordnete Ausnehmung in dem benachbarten Käfigsegment (1b) zur Aufnahme und Verriegelung der Zunge vorgesehen ist.

10. Lagerkäfig nach Anspruch 5, dadurch gekennzeichnet, daß die Zunge (151) an ihrem freien Ende in einem Paar von axial einander entgegengesetzten konvexen Kopfteilen (152) endet und daß die Aufnahme (161) zwischen einem Paar axial mit Abstand angeordneten Armen (163) angeordnet ist, die axial einander entgegengerichtete verdickte Enden (164) aufweisen, zwischen denen sich eine zu der Aufnahme führende Eingangsöffnung mit verminderter Breite befindet.

11. Lagerkäfig nach Anspruch 5, dadurch gekennzeichnet, daß die Zunge (151) sich in Umfangsrichtung von einem axialen Endbereich des jeweiligen Käfigsegments (1a) her erstreckt und einen einzigen axial gerichteten konvexen Kopfteil (152) hat, der eine Fortsetzung des axial inneren Endes der Zunge bildet und in Umfangsrichtung mit Abstand gegenüber dem Ende des Segments selbst angeordnet ist, und daß das benachbarte Käfigsegment (1b) einen einzigen Arm (163) aufweist, der sich in Umfangsrichtung von einem axial gegenüberliegenden Endbereich her erstreckt und in einem verdickten Ende (164) endet, das dem konvexen Kopfteil (152) axial entgegengesetzt gerichtet und in der Lage ist, mit diesem eine Verriegelung zu bilden.

12. Lagerkäfig nach Anspruch 5, dadurch gekennzeichnet, daß ein Käfigsegment (1a) mit einem Paar von radial mit Abstand angeordneten, axial voneinander getrennten Zungen (151, 151') von verminderter axialer Breite in Bezug auf den übrigen Teil des Käfigsegments versehen ist, wobei die Zungen (151, 151') in radial einander entgegengerichteten konvexen Kopfteilen (152, 152') enden, und daß das benachbarte Käfigsegment (1b) mit einem Paar von axial mit Abstand versehenen Aufnahmen (161, 161') versehen ist, die komplementär zu den Zungen (151, 151') ausgebildet und wenigstens zum Teil durch in Umfangsrichtung gerichtete Arme (163, 163') begrenzt sind, die in verdickten Enden (164, 164') zum Zusammenwirken und Verriegeln mit den Zungen (151, 151') und ihren Kopfteilen (152, 152') enden.

## Revendications

1. Cage annulaire de roulement ayant plusieurs discontinuités délimitant des segments en arcs de cage (1a, 1b) munis chacun à ses extrémités de moyens de connexion (151, 161) avec un segment voisin, chaque moyen de connexion étant réalisé de manière à rendre inséparable une paire de segments jointifs (1a, 1b) au moins en direction circonférentielle, cette cage étant caractérisée en ce que chacun desdits moyens de connexion (151, 161) comporte un jeu circonférentiel ($b_1$, $b_2$) qui permet l'élargissement et la réduction du diamètre de cage.

2. Cage selon la revendication 1, dans laquelle chacun desdits segments voisins a des moyens de connexion réalisés de manière à être également inséparables en direction radiale.

3. Cage selon la revendication 1 ou 2, dans laquelle chacun desdits segments voisins a des moyens de connexion réalisés de manière à être également inséparables en direction axiale.

4. Cage selon l'une quelconque des revendications précédentes, dans laquelle les moyens de connexion comprennent une langue (151), à une extrémité du segment (1a) de cage, pouvant être engagée dans une embase (161) de l'extrémité coopérante du segment (1b) associé, la langue et l'embase ayant des moyens complémentaires de verrouillage servant à rendre inséparables lesdits segments dans la ou les directions requises.

5. Cage selon la revendication 4, dans laquelle l'embase (161) est définie en partie par un ou plusieurs bras (163) orientés circonférentiellement et s'étendant du segment (1b) de cage et une extrémité surépaissie (164) d'extrémité de chaque bras, et dans laquelle l'extrémité libre de la langue (151) a une ou plusieurs parties convexes (152) de tête respectivement complémentaires et coopérant avec la ou chaque extrémité (164) pour constituer lesdits moyens de verrouillage.

6. Cage selon la revendication 5, dans laquelle la langue (151) se termine à son extrémité libre en une paire de parties de têtes convexes et radialement opposées et dans laquelle l'embase (161) est définie entre une paire de bras (163) radialement espacés, les extrémités (164) de ces bras servant à constituer une entrée réduite de ladite embase.

7. Cage selon la revendication 5, dans laquelle la langue (151) s'étand circonférentiellement depuis une région périphérique radialement du segment (1a) respectif de cage et a une partie unique (152) de tête convexe orientée vers la périphérie radiale opposée de ce segment, alors que le segment jointif (1b) de cage a un bras unique (163) s'étendant circonférentiellement depuis sa région périphérique radiale opposée et se terminant en extrémité (164) surépaissie orientée radialement à l'opposé de ladite partie convexe (152) de tête.

8. Cage selon la revendication 7, dans laquelle la langue (151) comporte entre ses extrémités axiales un évidement (154) et dans laquelle l'embase (161) est munie d'un élargissement (166) correspondant à l'extrémité surépaissie (164) pour s'engager et se verrouiller dans cet évidement.

9. Cage selon la revendication 7, dans laquelle la langue (151) est de largeur réduite axialement, par rapport au reste du segment respectif (1a) de cage, et est située entre les extrémités axiales dudit segment, et dans laquelle un évidement similaire est situé dans le segment (1b) voisin de cage, pour recevoir et se verrouiller avec ladite langue.

10. Cage selon la revendication 5, dans laquelle la langue (151) se termine à son extrémité libre en une paire de parties de têtes convexes et axialement opposées et dans laquelle l'embase (161) est définie entre une paire de bras (163) axialement séparés ayant des extrémités surépaissies (164) axialement opposées entre lesquelles se trouve une entrée de largeur réduite vers ladite embase.

11. Cage selon la revendication 5, dans laquelle la langue (151) s'étend circonférentiellement depuis une région d'extrémité axiale du segment (1a) respectif de cage et a une partie (152) convexe de tête orientée axialement se poursuivant depuis son extrémité axialement interne, en relation espacée circonférentiellement de l'extrémité du segment même, et dans laquelle le segment jointif (1b) de cage a un bras unique (163) s'étendant circonférentiellement depuis une région opposée d'extrémité axiale et se terminant en une extrémité surépaissie (164), laquelle est opposée axialement à et capable d'interverrouillement avec ladite partie convexe (152) de tête.

12. Cage selon la revendication 5, dans laquelle un segment (1a) de cage est muni d'une paire de langues (151, 151') espacées radialement et séparées axialement de largeur axiale réduite par rapport au reste des segments de cage, les langues (151, 151') se terminant en parties (152, 152') de têtes convexes radialement opposées, et dans lesquelles le segment jointif (1b) de cage est muni d'une paire d'embases (161, 161') séparées axialement complémentaires des langues (151, 151') et définies, au moins en partie, par des bras respectifs (163, 163') orientés circonférentiellement terminés en extrémités surépaissies (164, 164') pour coopérer et s'interverrouiller avec les langues (151, 151') et leurs parties (152, 152') de têtes.

# FIG. 1.

# FIG. 2.

*FIG. 3.*

*FIG. 5.*

*FIG. 4.*

## FIG. 6.

## FIG. 7.

## FIG. 8.

0 016 880

FIG. 9.

FIG. 10.

FIG. 11.

4

## _FIG.12._

## _FIG.13._

## _FIG.14._

_FIG. 15._

_FIG. 16._

6